Europäisches Patentamt

European Patent Office

Office européen des brevets

(11) Publication number: **0 346 681**
**A2**

## (12) EUROPEAN PATENT APPLICATION

(21) Application number: **89109781.8**

(22) Date of filing: **30.05.89**

(51) Int. Cl.⁴: **F03B 1/02**

(30) Priority: **14.06.88 IT 2096088**

(43) Date of publication of application:
**20.12.89 Bulletin 89/51**

(84) Designated Contracting States:
**AT BE CH DE ES FR GB GR IT LI LU NL SE**

(71) Applicant: **RIVA CALZONI S.p.A.**
**Via Stendhal 34**
**Milan(IT)**

(72) Inventor: **Coffetti, Mario**
**Via Caravaggio 4**
**I-20144 Milano(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Impeller for pelton-type hydraulic turbines.

(57) The present invention relates to an impeller (1) for Pelton-type hydraulic turbines, comprising a substantially circular central body (2) which peripherally supports a plurality of cup-like blades (3) arranged along a circular crown. The blades (3) are made of composite materials, for example resins reinforced with mineral fibers, and are fixed to the central body (2). Each blade (3) is traversed by a portion of a passage (5) which, when the blades (3) are assembled to the central body (2), extends along a path which is concentric to the axis of the impeller (1). Means (6,7) for achieving the mutual cohesion of the blades (3) are inserted in said passage (5).

Fig.1

EP 0 346 681 A2

## IMPELLER FOR PELTON-TYPE HYDRAULIC TURBINES

The present invention relates to an impeller for Pelton-type hydraulic turbines, with reduced production costs.

As is known, the energy crisis and the increase in atmospheric pollution have led to the re-evaluation of natural energy sources and, among these, in particular the exploitation of naturally available hydraulic energy for the production of electric power.

In many mountain regions, hypotheses of exploitation of water streams with a low flow rate and considerable level variations along their course have been evaluated for the installation of small electric power stations, capable of satisfying the energy requirements of a limited number of users. Such exploitation hypotheses have turned out to be particularly convenient for users which require a reduced amount of installed power and are in very remote locations, since the cost of the provision of an electric power line for serving said users would be prohibitive.

Within the scope of the exploitation of naturally available hydraulic energy to satisfy the needs of small users, small-size impellers, in particular for Pelton-type hydraulic turbines, have been designed.

The production of said turbines with conventional methods entails considerable time and consequent costs which considerably reduce the convenience of installations of this kind, particularly in those cases for which a relatively short period of use is envisaged.

In order to reduce the production costs of said turbines, tests have been conducted with low-cost materials which can be processed by molding to produce the impeller blades, such as for example so-called composite materials, generally constituted by resins reinforced with mineral fibers.

The use of said materials to produce impellers for Pelton-type hydraulic turbines has revealed numerous disadvantages related to the resistance of the impellers, due to the fact that composite materials are not capable of withstanding high shearing stresses. Due to this fact, cracks may form in the region where the impeller blades are coupled to the central body of the impellers, with consequent breakages.

The aim of the present invention is to solve the above described problems by providing an impeller for Pelton-type hydraulic turbines which has satisfactory resistance and durability despite modest production costs.

Within the scope of this aim, an object of the invention is to provide an impeller which is economically competitive in low-power installations for the supply of a reduced number of users in remote locations.

Another object of the invention is to provide an impeller for Pelton-type turbines which has good hydraulic efficiency.

This aim, these objects and others which will become apparent hereinafter are achieved by an impeller for Pelton-type hydraulic turbines, comprising a substantially circular central body peripherally supporting a plurality of cup-like blades arranged along a circular crown and defining an impeller axis, characterized in that said blades are made of composite materials and are fixed to said central body, each of said blades having a body defining a passage, said passage extending along a path which is concentric to said impeller axis, means being inserted in said passage for causing mutual cohesion of said blades.

Further characteristics and advantages of the invention will become apparent from the description of a preferred but not exclusive embodiment of the impeller according to the invention, illustrated only by way of non-limitative example in the accompanying drawings, wherein:

figure 1 is a partially sectional view of a portion of the impeller according to the invention;

figure 2 is an enlarged sectional view of figure 1, taken along the axis II-II.

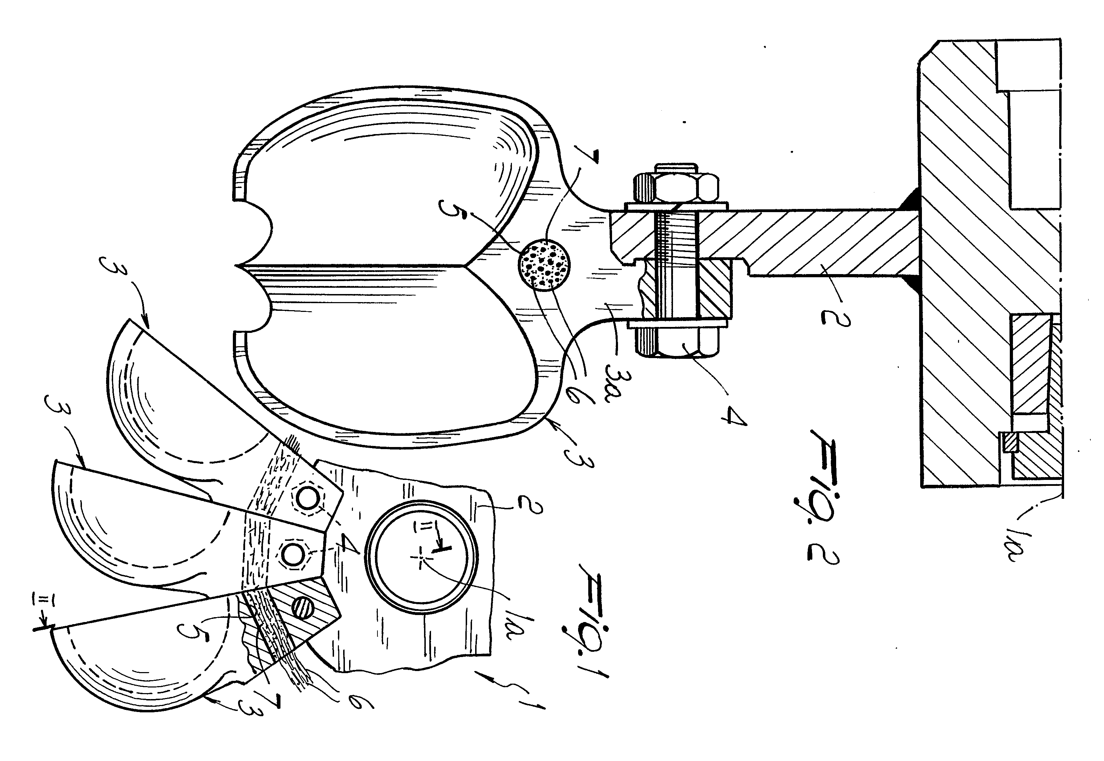

With reference to the above described figures, the impeller according to the invention, generally indicated by the reference numeral 1, comprises a central body 2, preferably constituted by a steel disk, and a plurality of cup-like blades 3 supported by the central body and arranged along a circular crown concentric to the axis 1a of the impeller i.e. to the axis of the central body 2.

Each blade 3 is produced by molding composite materials, preferably resins reinforced with natural fibers, and has a portion 3a which is external to the cup and is used to fix the blade, for example by means of bolts 4, to the central body 2.

According to the invention, a passage 5 is defined in the blades 3 and extends along a path concentric to the axis 1a of the impeller; means are arranged in said passage to obtain the mutual cohesion of the blades.

More particularly, each blade 3 is traversed by a hole in the region comprised between the cup-like part and the end bolted to the central body 2, so that, when the blades 3 are associated with the central body there is defined a passage 5, of which the hole defined in each blade constitutes a portion. In practice the passage 5 has a polygonal configuration which has a number of sides corresponding to the number of blades and defines a center lying on the axis 1a of the impeller.

The means inserted in the passage 5 are preferably io constituted by reinforcement fibers 6 which are embedded in one or more resins 7 conveniently injected into the passage 5. The hardening of the resin 7 forms a ring which acts as a reinforcement for the crown of blades and is monolithic therewith.

During the injection of the resin into the passage 5, any excess resin furthermore escapes between the blades, glueing their outer surfaces and contributing to an increase in the monolithic characteristics of the impeller.

In order to further increase said monolithic characteristics, one or more reinforcement rings, for example metallic rings, may be conveniently fixed to the outer surface of the blades 3 concentrically to the axis 1a of the impeller. Said rings, which may be fixed for example by bolting, welding and glueing, are not illustrated for the sake of simplicity.

In practice it has been observed that the impeller according to the invention fully achieves the above-mentioned aim and objects, since by virtue of the intermediate reinforcement ring it has a high resistance which allows the use of blades molded individually with composite materials and therefore with modest production costs.

Another advantage arising from the use of molded blades is that blades with very precise profiles are obtained, thereby achieving a high degree of hydraulic efficiency of the impeller.

The impeller thus conceived is susceptible to numerous modifications and variations, all of which are within the scope of the inventive concept; all the details may furthermore be replaced with technically equivalent elements.

In practice, the materials employed, so long as compatible with the specific use, as well as the dimensions, may be any according to the requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Impeller for Pelton-type hydraulic turbines, comprising a substantially circular central body peripherally supporting a plurality of cup-like blades arranged along a circular crown and defining an impeller axis, characterized in that said blades are made of composite materials and are fixed to said central body, each of said blades having a body defining a passage, said passage extending along a path which is concentric to said impeller axis, means being inserted in said passage for causing the mutual cohesion of said blades.

2. Hydraulic turbine impeller, according to claim 1, characterized in that said means for causing mutual cohesion of said blades are constituted by reinforcement fibers arranged in said passage and by resins embedding said fibers.

3. Hydraulic turbine impeller, according to claim 1 or 2, characterized in that said passage extends in said blades between the cup-shaped end of each blade and the region for coupling to said central body.

4. Hydraulic turbine impeller, according to one or more of the preceding claims, characterized in that said passage extends along a polygonal path centered on said impeller axis and has a portion of passage defined in each blade, each of said portion defining a side of said polygonal path.

5. Hydraulic turbine impeller, according to one or more of the preceding claims, characterized in that said blades are produced by molding resins including mineral fibers.

6. Hydraulic turbine impeller, according to one or more of the preceding claims, characterized in that at least one reinforcement ring is applied to said blades and is arranged concentrically to said impeller axis.

7. Process for assembling an impeller for Pelton-type hydraulic turbines, comprising a substantially circular central body and a plurality of cup-like blades made of composite materials and fixed to said central body and defining an impeller axis, characterized in that reinforcement fibers are inserted in a passage defined in said blades and extending along a path which is concentric to said impeller axis, and in that a resin embedding said fibers is injected therein, for causing mutual cohesion of said blades.

Fig. 2

Fig. 1